# EUROPÄISCHE PATENTSCHRIFT

(11) **EP 1 666 953 B1**
(45) Veröffentlichungstag und Bekanntmachung des Hinweises auf die Patenterteilung: **19.10.2016**
(21) Anmeldenummer: 06003745.4
(22) Anmeldetag: 10.12.1997
(51) Int. Cl.: B24B 13/005, B24B 41/06, B25B 11/00, B24B 9/14, G02C 7/06

(54) **Verfahren zur Herstellung eines Brillenglases mit sphärischer Vorderseite und progressiver Rückseite**
Method of producing a spectacle lens comprising spherical front side and progressive rear side
Procédé de fabrication d'un verre de lunette muni d`une face avant sphérique et d`une face arrière progressive

(30) Priorität: 16.01.1997 DE 19701312
(43) Veröffentlichungstag der Anmeldung: 07.06.2006
(62) Teilanmeldung aus: 97121716.1
(73) Patentinhaber: Carl Zeiss Vision GmbH, 73430 Aalen (DE)
(72) Erfinder: Hanßen, Adalbert, 89551 Königsbronn (DE); Hof, Albrecht, 73430 Aalen (DE)
(74) Vertreter: Glawe, Delfs, Moll

(56) Entgegenhaltungen:
- EP-A1- 0 169 931
- EP-A1- 0 341 998
- EP-A2- 0 281 754
- DE-A1- 4 210 008
- US-A- 3 797 922
- US-A- 5 402 607

## Beschreibung

Die Erfindung betrifft ein Verfahren zur Herstellung einer Brillenlinse mit einer sphärischen oder rotationssymmetrisch asphärischen Vorderseite und einer Rückseite (Rezeptfläche).

Brillenlinsen unterteilen sich in solche mit einem einzigen Brechwert und solche mit mehreren, aber mindestens zwei verschiedenen Brechwerten. Die unterschiedlichen Brechwerte dienen dazu, dem Benutzer mit eingeschränktem oder gestörtem Akkomodationsvermögen zumindest im Nah- und Fernbereich einwandfreies Sehen zu ermöglichen.

Die unterschiedlichen Brechwerte können in diskreten Schritten auftreten (Bifokal, Trifokal) oder im gleitenden Übergang als Gleitsichtfläche.

Aus fertigungstechnischen und ästhetischen Gründen werden derzeit Flächen mit variablem Brechwert vorzugsweise auf der Vorderseite einer Brillenlinse angebracht. Man arbeitet mit einer beschränkten Anzahl von Mehrstärkenflächen (Gleitsichtflächen), da beim Feinschleifen oder Polieren für jede zu fertigende Flächenart ein individuelles Werkzeug erforderlich ist. Diese Werkzeuge müssen für jede Flächenart erzeugt, bevorratet und gewartet werden.

Um trotzdem für jeden Benutzer die richtige dioptrische Wirkung (sphärisch, astigmatisch und prismatisch) wenigstens in bestimmten Punkten auf der Brillenlinse (insbesondere in den Bezugspunkten Ferne und Nähe) zu erreichen, wird die Rückfläche der Brillenlinse in der Regel mit einer sphärischen oder torischen Rezeptfläche versehen, die mit herkömmlichen Maschinen der Optikbearbeitung hergestellt werden. Eine stärkere torische Wirkung auf der Vorderseite einer Brillenlinse sieht sehr unschön aus.

Dabei wird die Brillenlinse im gegenwärtigen Sprachgebrauch durch diejenigen Werte für Sphäre, Astigmatismus und Prisma beschrieben, die die Brillenlinse im Fern- und Nahbezugspunkt erreicht. In allen anderen Punkten auf der Brillenlinse können davon abweichende Werte festgestellt werden, so daß die dioptrische Wirkung durch Funktionen in x-, y-Koordinaten beschrieben werden kann.

Es ist bekannt, daß Brillenglasflächen mit Mehrstärkenwirkung nur für die Entwurfskonstellation optimale Korrekturergebnisse zeigen. Benutzt man eine Mehrstärkenfläche mit einer von der Entwurfskonstellation abweichenden Rezeptfläche, kommt es zu Einbußen bei der Bildqualität. Um diese zu vermeiden ist z.B. in Offenlegungsschrift DE 42 10 008 A1 ein Verfahren beschrieben, bei dem eine zusätzliche Freiformfläche mit kleinen Abweichungen von der Sphäre/Torus auch auf die Rückseite aufgebracht wird.

Erweiterte fertigungstechnische Möglichkeiten, insbesondere eine Direktbearbeitung mit Fast-Tool-Servo zur Fertigung von Kunststoffbrillenlinsen, ermöglichen es, gebrauchsfähige optische Oberflächen auch mit stark unsymmetrischer Form herzustellen. Dabei sind keine weiteren oder nur sehr kurze Arbeitsgänge mit flächigem Werkzeug (Polieren) notwendig. Es müssen keine speziell auf eine Fläche abgestimmten Werkzeuge benutzt werden. Deshalb kann man mit dieser neuen Technik mit einer kleinen Zahl von Werkzeugen eine große Zahl unterschiedlicher Flächen erzeugen, was bisher nicht so war.

Alternativ können auch Verfahren benutzt werden, bei denen ein Werkzeug mit geometrisch definierter (Fräsen) oder geometrisch undefiniert (Schleifen) Schneide mit dem Werkstück lokal im Eingriff ist.

In der US 2,878,721 wird eine Multifocus-Brillenlinse beschrieben, bei welcher die Multifocus-Fläche bevorzugt auf der Rückseite, d.h. der augenzugewandten Seite des Brillenglases, liegt. Die andere Fläche hat eine sphärische, torische oder zylindrische Form. Die Multifocus-Fläche wird in Form von gebietsweise definierten Polynomen beschrieben, die an den Schnittstellen mindestens 1. Ableitungen stetig, möglichst auch 2. Ableitungen p, q, r, s, t stetig haben. Um eine konkave Fläche zu erhalten, wie sie üblicherweise für eine Brillenglasinnenseite erforderlich ist, wird eine sphärische, torische oder zylindrische Fläche zu der Multifocus-Fläche addiert, so daß die Wirkung z.B. 6 dpt. in einem Bereich erreicht wird. Die Adaption an den individuellen Nutzer wird ausdrücklich mit der 1. Fläche durchgeführt.

In Spalte 9, Zeile 47 ff. wird ausdrücklich die Addition von verschiedenen Flächenanteilen beschrieben. Von einer Optimierung der Oberflächen an individuelle Gegebenheiten ist keine Andeutung vorhanden.

In der DE 18 05 561 wird eine Brillenlinse mit starker Brechkraft und vorgegebenem Astigmatismus beschrieben. Es wird eine Methode angegeben, wie man mit Hilfe von Ellipsenschnitten den Astigmatismus korrigiert. Die Korrekturstrategie wird auf segmentierte Flächen erweitert, deren Segmente unterschiedliche Brechkräfte besitzen. Im einfachsten Fall erhält man ein Bifokalglas, der Übergang zum Gleitsichtglas wird durch Heraufsetzen der Sektorenzahl realisiert.

Die sektorierte Fläche wird auf die Vorder- oder Rückseite aufgebracht. Der Astigmatismus kann auf der Vorder- oder Rückseite berücksichtigt werden. Die sektorierte Fläche wird entweder auf eine Sphäre oder einen Torus/Zylinder aufgebracht. Es wird auf "Drehen" als Herstellverfahren Bezug genommen und von einer Sphäre als Startfläche ausgegangen. Man erhält eine rotationssymmetrische Asphäre. Die Anpassung auf den individuellen Gebrauchsfall wird nicht diskutiert.

In der DE 42 10 008 A1 wird eine Brillenlinse mit einer Mehrstärkenfläche und einer Freiform-Rezeptfläche beschrieben.

In dem Bericht von Guilino, Barth, Neue progressive Flächen, DOZ, 11. Nov. 1980, S. 20 ff. wird der Aufbau einer Gleitsichtfläche mit Hilfe von Kegelschnitten beschrieben. Es ist bekannt, dass die beschriebenen Flächen auf die Glasvorderseite aufgebracht wurden/werden. Die Rückseite wird zur Anpassung auf den individuell Fall mit Sphäre oder Torus/Zylinder gestaltet.

Die EP 0 341 998 A1 offenbart einen multifokalen ophthalmischen Linsenverbund, bei dem ein kleines Linsenelement für den Nahbereich auf die okulare Oberfläche einer großen Linse aufgeklebt ist. Die Vorderfläche der großen Linse weist zumeist eine ebene oder eine einfache sphärische Fläche auf. Die Rückfläche kann eine torische Oberfläche aufweisen.

Die US 3,797,922 offenbart eine poly fokale ophthalmische Linse mit polyfokaler Rückfläche und individuell in üblicher Weise geformter Vorderfläche. Die Vorderfläche hat beispielsweise eine herkömmliche sphärische Kontur.

Aus der EP 0 341 998 A1 ist ein aus einer Hauptlinse und einer kleinen anklebbaren Nahbereiclzslinse bestehender Linsenverbund bekannt. Die dort beschriebene Nahbereichslinse kann auch verwendet werden, wenn die Rückfläche der Hauptlinse eine torische Gestalt aufweist. Eine Anpassung auf individuelle Bedürfnisse des Benutzers ist nicht vorgesehen.

Die EP 0 809 126 A1 beschreibt eine Brillenlinse mit einem progressiven Bereich auf der dem Auge zugewandten Seite, Die Rückfläche kann auch eine torische oder zylindrische Gestalt aufweisen. Eine Anpassung auf individuelle Bedürfnisse des Benutzers ist nicht vorgesehen.

Die EP 0 281 754 A2 offenbart ein Verfahren zum Herstelien von Rezeptbrillenlinsen. Bei dem Verfahren werden die Rezeptinformationen verwendet, um die Arbeit einer datengesteuerten Schneidemaschine zu steuern, welche eine Fläche der gewünschten Form entweder direkt auf einen Linsenrohling oder einen Läpprohling oder auf beide, einen Linsenrohling und einen Läpprohling aufbringt. Der Läpprohling ist dazu vorgesehen, die Rezeptfläche der Linse zu bearbeiten. Eine Aufgabe nach diesem Dokument besteht darin, eine Linsenfläche mit einem Multifokalsegment herzustellen, so dass eine multifokalen Linse aus Linsenralllingen mit ursprünglich zwei sphärischen oder anderen nichtsegmentierten Flächen produziert werden kann.

Die US 5 402 607 A verweist darauf, dass mit dem aus der EP 0 281 754 bekannten Typ progressive Oberflächen ophthalmischer Linsen hergestellt werden können.

Es ist die Aufgabe der Erfindung ein preiswertes Verfahren zur Herstellung einer Brillenlinse zu schaffen, welche nach den individuellen Bedürfnissen des späteren Nutzers schnell aus einer recht einfach herzustellenden (rein sphärisch oder rotationssymmetrisch asphärisch) Rohlinse geschaffen werden kann.

Diese Aufgabe wird erfindungsgemäß durch den kennzeichnenden Teil des ersten Anspruchs gelöst.

Abweichend von der allenthalben praktizierten Lösung für Brillengläser mit multifokaler Wirkung hat bei der erfindungsgemäß hergestellten Brillenlinse die Vorderseite der Brillenlinse immer eine sphärische Fläche oder eine einfache rotationssymmetrische asphärische Fläche. Durch diese Fläche wird im wesentlichen die Durchbiegung der fertigen Brillenlinse bestimmt.

Die Rückseite ist eine individuell optimierte multifokale Rezeptfläche, die die dioptrischen Korrekturanforderungen hinsichtlich sphärischer, astigmatischer und prismatischer Wirkung für die jeweils rezeptierte Gebrauchsbedingung erfüllt. Dazu gehört insbesondere die bei Altersfehlsichtigkeit erforderliche stärkere Wirkung im Nahbereich.

Die nach dem erfindungsgemäßen Verfahren hergestellte Brillenlinse besitzt eine sphärische oder rotationssymmetrische asphärischen Vorderseite und eine erfindungsgemäß ausgestaltete multifokale Rückseite (Rezeptfläche).

Erfindungsgemäß werden alle individuellen Anforderungen des Brillenrezepts, bestehend aus sphärischer und astigmatischer und prismatischer Wirkung und deren Verteilung in x, y über der Brillenlinse durch die Rezeptfläche verfüllt.

Interessant ist insbesondere die Möglichkeit, auch torische Wirkungen zusammen mit multifokaler Wirkung auf der Rückseite unterzubringen.

Wegen der ungünstigen ästhetischen Beurteilung wird keine der notwendigen individuellen Anforderungen des Brillenrezepts auf der Vorderseite der Brillenlinse realisiert.

Die erfindungsgemäße Brillenlinse besitzt auf der Brillenlinsenrückseite keine Punkt- und/oder Achsensymmetrie und hat aber multifokale Eigenschaften.

Ausgehend von vorher bestimmten Startflächen wird eine individuelle Optimierung der Rezeptfläche durchgeführt, wobei der individuelle Pupillenabstand in die Optimierungsrechnung einbezogen wird.

Vorteilhafterweise hat die Brillenlinse eine Rückfläche, die sich aus der Addition eines sphärischen oder torischen Wirkungsanteils mit einem Bifokal-, Trifokal- oder Gleitsichtanteil ergibt.

Es ist vorteilhaft, wenn ausgehend von vorher bestimmten Startflächen eine individuelle Optimierung der dioptrischen Werte (Sphäre, Astigmatismus, Prisma) auf der dem Auge zugewandten Fläche des Brillenglases erfolgt, wobei die Zielfunktionen für Sphäre, Astigmatismus und Prisma oder daraus abgeleitete Funktionen und deren Gewichte in Anlehnung an die beim Design der Startflächen erzielten Ergebnisse gewählt werden. Häufig optimiert man ein Brillenglas in endlich vielen Punkten, die dicht genug liegen, damit das Design auch zwischen den Punkten stimmt. Bei Optimierung an endlich vielen Punkten kann man das Problem linearisieren und als überbestimmtes Gleichungssystem unter Verwendung kleinster Fehlerquadrate lösen. Es ist auch möglich, eine Optimierung an allen Punkten durchzuführen. Das heißt dann aber, dass man Fehlerintegrale lösen und Methoden der Variationsrechnung verwenden muss. Eine Optimierung in endlich vielen, dicht beieinander liegenden Punkten ist sehr viel einfacher als eine Optimierung in allen Punkten der Fläche und liefert vergleichbare Ergebnisse.

Vorteilhaft kann man auch bei der Optimierungsrechnung die prismatische Nebenwirkung nach Anforderung für beidäugiges Sehen individuell ausgeglichen werden, wobei mögliche unterschiedliche dioptrische Wirkungen für das rechte und linke Auge berücksichtigt werden.

Das erfindungsgemäße Verfahren zur Herstellung von Brillenlinsen mit multifokaler Wirkung kann sich dadurch auszeichnen, dass die Varianten einer ersten oder einiger weniger Brillenlinse(n), die gemäß vorher durchgeführter Designüberlegungen entstanden ist (sind), aus Halbfabrikaten mit sphärischen oder asphärisch rotationssymmetrischen konvexen Vorderflächen mit ca. 10 unterschiedlichen Radien so hergestellt werden, dass die gesamte individuell erforderliche dioptrische Wirkungsanpassung mit einer Freiformfläche auf der dem Auge zugewandten Seite der Brillenlinse erfolgt, deren Form aus einer Optimierungsrechnung mit den Designerergebnissen als Optimierungsstart folgt.

Dabei ist es vorteilhaft, wenn ausgehend von vorher bestimmten Startflächen eine individuelle Optimierung der Freiformfläche vorgenommen wird, so dass die dioptrischen Rezeptwerte (Sphäre, Astigmatismus, Prisma) in den Messpunkten erreicht werden. Die Ähnlichkeit der entstehenden Fläche mit der Startfläche wird über die Startfläche selbst, die Form der diskreten oder kontinuierlichen Zielfunktionen und der diskreten oder kontinuierlichen Gewichtsfunktionen sichergestellt.

Desweiteren ist es vorteilhaft, wenn zur Aufnahme der Rohlinge mit sphärischen oder asphärischen rotationssymmetrischen konvexen Vorderflächen zur Bearbeitung der Rückseite eine entsprechend der Anzahl der Vorderflächenradien gleiche oder geringere Anzahl passender Halterungen vorhanden ist, so daß die Halterung ohne weitere Hilfsstoffe erfolgt.

Die Erfindung wird nachfolgend an Anwendungsbeispielen unter Zuhilfenahme von Figuren näher erläutert.

Dabei zeigen:
- Figur 1: eine schematische Darstellung zur Standartpupillendistanz;
- Figur 2a: ein Vakuumspannfutter in Aufsicht; und
- Figur 2b: ein Vakuumspannfutter in seitlicher Ansicht mit aufgelegter Brillenlinse.
- Figur 3: eine schematishce Darstellung der erfindunggemäßen Brillenlinse vor dem Auge des Nutzers;
- Figur 4a: eine Darstellung der astigmatischen Abweichung der erfindungsgemäßen Brillenlinse; und
- Figur 4b: eine Darstellung der sphärischen Abweichung der erfindungsgemäßen Brillenlinse.

Im einem ersten Beispiel zu dieser Erfindung werden die derzeit auf Vorder- und Rückseite einer Brillenlinse verteilten dioptrischen Wirkungen von Gleitsichtfläche oder Bifokalfläche oder Trifokalfläche und sphärischer und torischer Rückfläche addiert und auf die Rückseite aufgebracht, wobei die Wirkung der sphärischen Vorderseite berücksichtigt wird.

In einem zweiten Beispiel wird ein Anforderungsprofil an das Brillenglas formuliert, bestehend aus dioptrischen Soll-Wirkungen (sphärisch, astigmatisch, prismatisch) in verschiedenen über das Glas verteilten Punkten oder auch ganzflächig. Dies schließt die Soll-Wirkung im Fern- und Nahbezugspunkt ein.

Die prismatische Wirkung gibt man in der Regel nur in einem oder wenigen Punkten vor. Das Anforderungsprofil kann durch Funktionen über x und y oder als Liste von Wirkungen an endlich vielen Punkten gegeben sein.

Für die Zielvorgaben wird eine individuelle Optimierung der Rezeptfläche durchgeführt, so daß die Zielvorgaben im Sinne eines Best-Fit erreicht werden. In der berechneten Lösung sind die Einzelanteile Sphäre, Torus/Zylinder, Prisma in verschiedenen Bereichen auf dem Brillenglas unterschiedlich. Diese Eigenschaft wird nur durch die Formgebung der Rückfläche erreicht.

Die Vorderseite ist sphärisch oder hat einen einfachen rotationssymmetrischen asphärischen Aufbau.

Bei der Lösung der Optimierungsaufgabe müssen wie üblich Startwerte vorgegeben werden. Das soll dadurch geschehen, daß man ein für einen im Parametergebiet in der Nähe liegenden Gebrauchsfall entworfenes Design, an verschiedenen, nicht zu dicht liegenden Stützpunkten, mit definierter sphärischer, astigmatischer und prismatischer Wirkung als Startwerte vorgibt.

Ein solches Startdesign berücksichtigt zweckmäßigerweise ebenfalls den für ungestörtes beidäugiges Sehen erforderlichen Ausgleich prismatischer Nebenwirkungen, vor allem derjenigen in vertikaler Richtung, so wie es in DE-PS 30 16 935 beschrieben ist.

Diese Vorgaben werden mit einer bestimmten Gewichtung der einzelnen Zielgrößen in einem separaten vorgelagerten Designschritt berechnet und im Rechner abgespeichert. Man kann nun für jeden individuellen Gebrauchsfall eine erneute Optimierung berechnen, die zu einer Anpassung der Startfläche an das individuelle Rezept führt, wobei die Ähnlichkeit der entstehenden Fläche mit der Designfamilie über die Startflächen, die Form der Zielfunktionen und die Gewichtsfunktionen sichergestellt ist.

Bei Übergang vom Fern- in den Nahsichtbereich treten zwangsweise Bildfehler auf. Diese über das Glas vorteilhaft zu verteilen, ist der eigentliche Designprozeß. Durch das hier vorgestellte Verfahren wird das im Designprozeß erreichte Minimum der auftretenden Bildfehler mit einer einzigen frei gestaltbaren Fläche bestmöglich erreicht, unabhängig davon, welche spezielle sphärische, astigmatische oder prismatische Wirkung gefordert ist.

Als Randbedingung für die spezielle Optimierung gehen z.B. ein:
- individuelle dioptrische Werte im Fern- und Nahpunkt (links/rechts)
- Hornhaut-Scheitelabstand
- unterschiedliche geforderte Eigenvergrößerung rechts/links (Aniseikonie)
- Vorneigung der Fassung
- Fassungsform
- Zentrierung
- Pupillendistanz
- spezielle Gebrauchssituationen
- für rechtes und linkes Auge unterschiedliche Wirkungen mit Auswirkung auf den Ausgleich prismatischer Nebenwirkungen.

Dabei bedeutet die Optimierung nach speziellen Gebrauchssituationen, daß man verschiedene Familien von Flächendesigns bildet.

Eine Designfamilie ist im Sinne dieser Erfindung eine Menge von einer oder einigen wenigen freiformbaren Startfläche und mathematisch beschriebenen Bewertungen für die Abweichungen der dioptrischen Wirkung der zu fertigenden Brillenlinse von den Zielvorgaben. Weiterhin wird eine mathematisch beschriebene Regel, für welche Rezeptforderung, welche der grob gestuften Standard-Vorderseiten, welche Startfläche und welche Bewertungen für die Optimierung zu verwenden sind, dem Design zugeordnet.

In der Regel wird ein Hersteller durch diese Erfindung in die Lage gesetzt, neben einer Universal-Gleitsichtglasfamilie auch Speziallösungen für die Bildschirmarbeit, für Autofahrer und für andere Spezialanforderungen kostengünstig herzustellen.

Ein derartiger Optimierungsprozeß ausgehend von grob gestuften Startflächen kann so vorbereitet werden, daß er für alle Bereiche üblicher Verschreibungen ohne Interaktion eines im Design erfahrenen Fachmanns vernünftige Ergebnisse liefert.

In den Fällen stark unterschiedlicher Größenwahrnehmung beider Augen (Aniseikonie) oder anderer ungewöhnlich starker Abweichungen zwischen beiden Augen, kann eine Verbesserung durch individuelle Optimierung erreicht werden. Dabei ist dann die Interaktion eines im Design erfahrenen Fachmanns erforderlich.

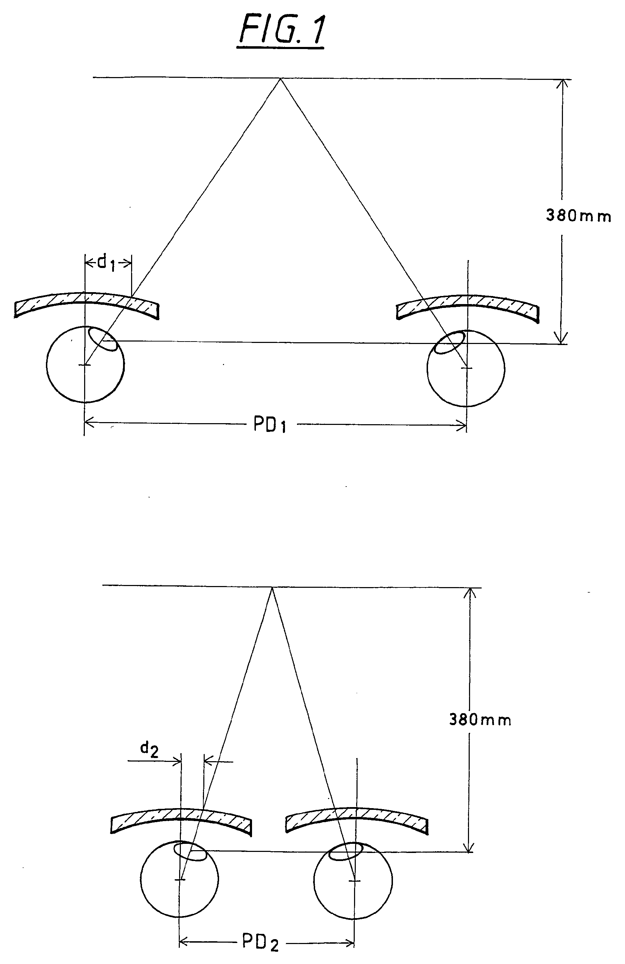

Derzeit sind Gleitsichtgläser immer für eine Standardpupillendistanz ausgelegt. Die Größenordnung der Abweichung von der Optimallage ist in Figur 1 dargestellt.

Da Gleitsichtgläser nicht verdreht eingebaut werden dürfen, entfällt die bei Bifokal- oder Trifokalgläsern angewandte Methode des definierten Verdrehens. Die Anpassung auf den individuellen Rezeptwert kann durch eine spezielle Optimierung der Freiformfläche (Rückfläche der Brillenlinse) erreicht werden.

Ein besonderer fertigungstechnischer Vorteil der dargestellten erfinderischen Lösung besteht darin, daß zum Haltern der Rohlinge mit sphärischen oder auch rotationssymmetrischen asphärischen Vorderflächen in der Bearbeitungsmaschine Standardspannwerkzeuge, z.B. Vakuumspannfutter mit angepaßter Spannfläche verwendet werden können.

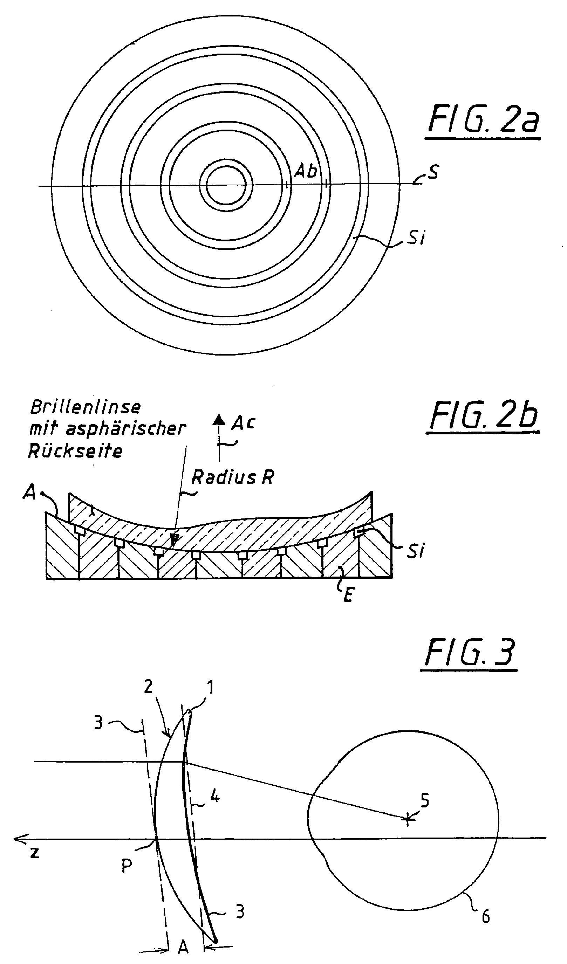

Eine Ausführungsform eines derartigen Spannfutters mit festem Radius R der Anlagefläche ist in Fig. 2a und b dargestellt. In die Anlagefläche A sind ringförmige Sicken Si eingearbeitet in denen ein Vakuum erzeugt werden kann.

In einer anderen Ausführungsform können anstatt der Sicken über die Auflagefläche verteilt Vertiefungen angebracht sein, die evakuiert werden können.

Wenn man den Abstand Ab zwischen den Sicken klein macht und zusätzlich die ringförmigen Auflageelemente E gegeneinander in Achsrichtung Ac verschiebbar gestaltet, kann man den Radius R verändern, so daß mit einem Spannwerkzeug Rohlinge mit verschiedenen Radien R auf der Vorderseite gehaltert werden können.

Die Zentrierung der Rohlinge kann entweder mit einer zusätzlichen Zentriervorrichtung z.B. bestehend aus drei gegen den Rand des Rohlings schwenkenden Zentrierstiften erfolgen. Alternativ kann man auch völlig ohne Zentrierung zum Rand des Rohlings arbeiten und stattdessen während der Bearbeitung Marken auf der Fläche anbringen, die eine anschließende Orientierung der Brillenlinse z.B. zum Einschleifen in die Brillenfassung erlauben.

In einer weiteren Ausführungsform können in eine Standardaufnahme Formteile zur Überbrückung der Radiusdifferenzen eingelegt werden.

Der derzeit erforderliche, aufwendige Blockvorgang mit niedrig schmelzenden Schwermetallegierungen entfällt. Da nur eine begrenzte Anzahl von z.B. 10 Vorderflächenradien erforderlich ist, kann man einzelne Bearbeitungsmaschinen einem Vorderflächenradius zuordnen und damit diesen Programmausschnitt fertigen.

Die Erfindung läßt sich insbesondere gut mit einer Direktbearbeitung praktizieren. Hiermit ist es möglich, gebrauchsfertige oder fast gebrauchsfertige optische Freiform-Oberflächen herzustellen.

Bei Direktbearbeitung, wie sie in der Anmeldung DE 19 538 274 beschrieben ist, wird von einem Drehprozeß ausgegangen.

Alternativ sind Prozesse mit definierter (Fräsen) oder undefinierter (Schleifen) Schneide denkbar.

Wichtig ist, daß das Werkzeug nur sehr lokal mit dem Werkstück im Eingriff ist. Die Bearbeitungsmaschine muß dabei gewisse Anforderungen hinsichtlich der Präzision erfüllen.

Die optischen Wirkungen eines Lieferprogramms von Sph +10 Dpt. bis -10 Dpt. lassen sich z.B. in 10 Bereichen mit unterschiedlicher Durchbiegung unterbringen.

Das heißt, man benötigt lediglich 10 sphärische Vorderflächen und kann dann alle Gleitsichtglasprogramme für die verschiedenen Anwendungen herstellen, die für dieses Material vorgesehen sind. Die Reduktion in der Lagerhaltung ist offensichtlich.

Im Herstellprozeß fällt das Blocken weg, man kann für jeden Vorderflächenradius z.B. ein Vakuum-Spannfutter vorsehen. Oberflächenveredelungen, wie z.B. Phototropisierung können auf der Vorderseite schon beim sphärischen Halbfabrikat aufgebracht werden oder bezogen werden.

Gegebenenfalls kann man die Anzahl der Programme leicht erweitern, da nur die entsprechenden Grunddesign im Rechner erzeugt werden müssen.

Das nun folgende Beispiel stellt eine Durchrechnung rü eine erfindungsgemäße Brillenlinse (1 in Figur 3) dar, bei welcher folgende Vorgaben berücksichtigt wurden:

| | |
|---|---|
| - Fernteilwirkung | : sph 2.5 dpt cyl 2.0 dpt Achse 45 Grad |
| - Addition | : 2:0 dpt |
| - Brechzahl des Linsenmaterials | : 1.600 |
| - Linsendurchmesser | : 60 mm |
| - Minimale Randdicke der Linse | : 0.5 mm |
| - Radius der Vorderfläche der Linse | : 92.308 mm |
| | (entspricht Flächenbrechwert von 6.5 dpt) |

mit Sphäre (sph), Zylinder (cyl) und Dioptrie (dpt).

Die Vorderfläche (2) ist eine sphärishce Fläche, wobei für die Lage der Bezugspunkte gilt (Angaben von vorne gesehen bezüglich der geometrischen Mitte):

| | |
|---|---|
| - Bezugspunkte Ferne | : (2.5 7.0) |
| - Bezugspunkte Nähe | : (5.0 -14.0) |
| - Zentrierkreuz | : (2.5 4.0) |

Die sphärische Vorderfläche (2) brphrt die um 6 Grad gekippte Basisebene (3) am Punkt P (2.5 4.0). Damit hat die Vorderfläche (2) bezüglich einer geeigneten Fassung eine Vorneigung von ca. 9 Grad. Die Rückfläche (3) ist eine optimierte Gleitsichtfläche. Die Basisebenen (2, 4) von Vorder-(2) und Rückfläche (3) sind beide um 6 Grad vorgeneigt und haben einen Abstand A von 4.1 mm zueinander. Der Abstand der rückseitigen Basisfläche (3) zum Drehpunkt (5) des Auges (6) beträgt 27,5 mm. In Figur 3 sind diese Verhältnisse zur Verdeutlichung dargestellt.

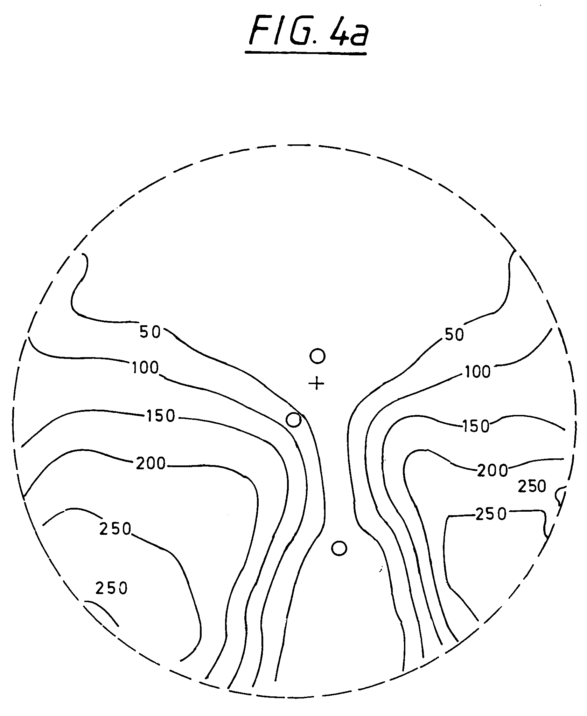

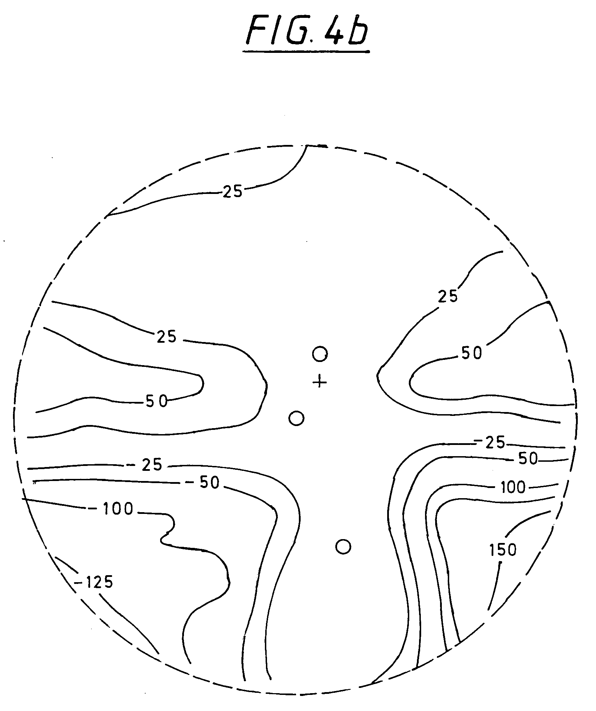

In den Figuren 4a und 4b ist zusätzlich noch die astigmatische (Fig. 4a) und die sphärische (Figur 4b) Abweichung der Linse gemäß dem erfindungsgemäßen Beispiel dargestellt.

Die nachfolgende Tabelle stellt die Pfeilhöhen der Rückflächen (3) und damit der Gleitsichtflächen dar, wobei die Pfeilhöhen von vorn gesehen sind bezüglich einer um 6 Grad gekippten Basisebene. Die Gitterweite beträgt 3.00 mm und der Linsendurchmesser beträgt 60.0 mm. Daraus ergeben sich bei der Berechung folgende Werte:

**Linke Hälfte der Linsenrückseite (3):**

| Y/X | -30.0 | -27.0 | -24.0 | -21.0 | -18.0 | -15.0 | -12.0 | -9.0 | -6.0 | -3.0 | .0 |
|---|---|---|---|---|---|---|---|---|---|---|---|
| : | | | | | | | | | | | |
| 30.0: | | | | | | | | | | | -.9994 |
| : | | | | | | | | | | | |
| 27.0: | | | | | | | -.8221 | -.7178 | -.6648 | -.6632 | -.7130 |
| : | | | | | | | | | | | |
| 24.0: | | | | | -1.0034 | -.7891 | -.6259 | -.5137 | -.4525 | -.4422 | -.4822 |
| : | | | | | | | | | | | |
| 21.0: | | | | -1.1475 | -.8769 | -.6556 | -.4852 | -.2651 | -.2955 | -.2765 | -.3061 |
| : | | | | | | | | | | | |
| 18.0: | | | -1.9077 | -1.0810 | -.8041 | -.5767 | -.3989 | -.2708 | -.1925 | -.1635 | -.1830 |
| : | | | | | | | | | | | |
| 15.0: | | | -1.3995 | -1.0680 | -.7853 | -.5513 | -.3661 | -.2300 | -.1425 | -.1031 | -.1116 |
| : | | | | | | | | | | | |
| 12.0: | | -1.8252 | -1.4420 | -1.1060 | -.8178 | -.5776 | -.3855 | -.2414 | -.1447 | -.0944 | -.0910 |
| : | | | | | | | | | | | |
| 9.0: | | -1.9175 | -1.5312 | -1.1914 | -.8988 | -.6536 | -.4555 | -.3039 | -.1980 | -.1366 | -.1207 |
| : | | | | | | | | | | | |
| 6.0: | | -2.0518 | -1.6630 | -1.3203 | -1.0245 | -.7755 | -.5724 | -.4143 | -.2997 | -.2277 | -.1993 |
| : | | | | | | | | | | | |
| 3.0: | | -2.2249 | -1.8339 | -1.9887 | -1.1904 | -.9382 | -.7311 | -.5675 | -.4461 | -.3652 | -.3253 |
| : | | | | | | | | | | | |
| .0: | -2.5720 | -2.4347 | -2.0412 | -1.6933 | -1.3919 | -1.1363 | -.9252 | -.7572 | -.6308 | -.5435 | -.4948 |
| : | | | | | | | | | | | |
| -3.0: | | -2.6775 | -2.2803 | -1.9287 | -1.6235 | -1.3639 | -1.1487 | -.9767 | -.8466 | -.7557 | -.7017 |
| : | | | | | | | | | | | |
| -6.0: | | -2.9471 | -2.5457 | -2.1903 | -1.8813 | -1.6179 | -1.3989 | -1.2233 | -1.0902 | -.9968 | -.9391 |
| : | | | | | | | | | | | |
| -9.0: | | -3.2425 | -28368 | -2.4779 | -2.1653 | -1.8980 | -1.6751 | -1.4959 | -1.3596 | -1.2634 | -1.2015 |
| : | | | | | | | | | | | |
| -12.0: | | -3.5642 | -3.1541 | -2.7916 | -2.4754 | -2.2041 | -1.9771 | -1.7937 | -1.6536 | -1.5534 | -1.4849 |
| : | | | | | | | | | | | |
| -15.0: | | | -3.4983 | -3.1320 | -2.8120 | -2.5365 | -2.3049 | -2.1169 | -1.9721 | -1.8666 | -1.7896 |
| : | | | | | | | | | | | |
| -18.0: | | | -3.8706 | -3.5005 | -3.1762 | -2.8963 | -2.6605 | -2.4679 | -2.3172 | -2.2044 | -2.1179 |
| : | | | | | | | | | | | |
| -21.0: | | | | -3.900 | -3.5699 | -3.2852 | -3.0450 | -2.8476 | -2.6901 | -2.5676 | -2.4706 |
| : | | | | | | | | | | | |
| -29.0: | | | | | -3.9948 | -3.7037 | -3.4582 | -3.2549 | -3.0894 | -2.9564 | -2.8482 |
| : | | | | | | | | | | | |
| -27.0: | | | | | | | -3.9006 | -3.6896 | -3.5153 | -3.3716 | -3.2524 |
| : | | | | | | | | | | | |
| -30.0: | | | | | | | | | | | -3.6852 |

**Rechte Hälfte der Linsenrückseite (3):**

| Y/X | -30.0 | -27.0 | -29.0 | -21.0 | -18.0 | -15.0 | -12.0 | -9.0 | -6.0 | -3.0 | .0 |
|---|---|---|---|---|---|---|---|---|---|---|---|
| : | | | | | | | | | | | |
| 30.0: | | | | | | | | | | | |
| : | | | | | | | | | | | |
| 27.0: | -.8132 | -.9623 | -1.1607 | -1.9086 | | | | | | | |
| : | | | | | | | | | | | |
| 24.0: | -.5718 | -.7101 | -.8972 | -1.1332 | -1.4171 | -1.7977 | | | | | |
| : | | | | | | | | | | | |
| 21.0: | -.3846 | -.5116 | -.6871 | -.9106 | -1.1813 | -1.4983 | -1.8614 | | | | |
| : | | | | | | | | | | | |
| 18.0: | -.2505 | -.3659 | -.5288 | -.7390 | -.9960 | -1.2989 | -1.6474 | -2.0418 | | | |
| : | | | | | | | | | | | |
| 15.0: | -.1679 | -.2714 | -.4213 | -.6175 | -.8600 | -1.1479 | -1.4809 | -1.8589 | | | |
| : | | | | | | | | | | | |
| 12.0: | -.1353 | -.2264 | -.3629 | -.5448 | -.7718 | -1.0435 | -1.3598 | -1.7209 | -2.1269 | | |
| : | | | | | | | | | | | |
| 9.0: | -.1517 | -.2292 | -.3520 | -.5191 | -.7295 | -.9833 | -1.2815 | -1.6246 | -2.0126 | | |
| : | | | | | | | | | | | |
| 6.0: | -.2165 | -.2795 | -.3873 | -.5381 | -.7303 | -.9646 | -1.2432 | -1.5671 | -1.9357 | | |
| : | | | | | | | | | | | |
| 3.0: | -.3288 | -.3764 | -.4669 | -.5985 | -.7699 | -.9829 | -1.2407 | -1.5446 | -1.8941 | | |
| : | | | | | | | | | | | |
| .0: | -.4862 | -.5174 | -.5874 | -.6955 | -.8435 | -1.0345 | -1.2714 | -1.5554 | -1.8861 | -2.2634 | |
| : | | | | | | | | | | | |
| -3.0: | -.6833 | -.6984 | -.7461 | -.8283 | -.9509 | -1.1194 | -1.3354 | -1.5993 | -1.9112 | | |
| : | | | | | | | | | | | |
| -6.0: | -.9128 | -.9129 | -.9393 | -.9959 | -1.0926 | -1.2380 | -1.4328 | -1.6765 | -1.9691 | | |
| : | | | | | | | | | | | |
| -9.0: | -1.1671 | -1.1539 | -1.1618 | -1.1958 | -1.2683 | -1.3908 | -1.5642 | -1.7874 | -2.0605 | | |
| : | | | | | | | | | | | |
| -12.0: | -1.4405 | -1.4147 | -1.4079 | -1.4246 | 1.4768 | -1.5778 | -1.7302 | -1.9336 | -2.1881 | | |
| : | | | | | | | | | | | |
| -15.0: | -1.7338 | -1.6963 | -1.6776 | -1.6807 | -1.7161 | -1.7982 | -1.9315 | -2.1164 | | | |
| : | | | | | | | | | | | |
| -18.0: | -2.0509 | -2.0022 | -1.9726 | -1.9642 | -1.9858 | -2.0517 | -2.1681 | -2.3360 | | | |
| : | | | | | | | | | | | |
| -21.0: | -2.3925 | -2.3331 | -2.2933 | -2.2755 | -2.2864 | -2.3389 | -2.4403 | | | | |
| : | | | | | | | | | | | |
| -24.0: | -2.7593 | -2.6896 | -2.6406 | -2.6150 | -2.6182 | -2.6605 | | | | | |
| : | | | | | | | | | | | |
| -27.0: | -3.1528 | -3.0733 | -3.0160 | -2.9840 | | | | | | | |
| : | | | | | | | | | | | |
| -30.0: | | | | | | | | | | | |

## Patentansprüche

1. Verfahren zur Herstellung von Brillenlinsen (1) mit multifokaler Wirkung, **dadurch gekennzeichnet, dass** die Brillenlinsen (1) aus Halbfabrikaten mit sphärischen oder asphärisch rotationssymmetrischen konvexen Vorderflachen (2) mit wenigen unterschiedlichen Radien so hergestellt werden, dass die gesamte individuell erforderliche dioptrische Wirkungsanpassung mit der als Gleitsichtflache ausgebildeten Rückfläche (3) der Brillenlinse (1) erfolgt, wobei ein Anforderungsprofil an die Brillenlinse (1) formuliert wird, bestehend aus dioptrischen Soll-Wirkungen, nämlich sphärisch, astigmatisch, prismatisch, in verschiedenen über die Brillenlinse (1) verteilten Punkten oder auch ganzflächig, wobei dies die Soll-Wirkung im Fern- und Nahbezugspunkt einschließt.

2. Verfahren nach Anspruch 1, **dadurch gekennzeichnet, dass** die vorgegebenen dioptrischen Soll-Wirkungen in allen Punkten oder in endlich vielen Punkten auf der als Gleitsichtfläche ausgebildeten Rückfläche (3) der Brillenlinse (1) im Sinne eines Best-Fit erreicht werden.

3. Verfahren nach einem der Ansprüche 1 oder 2, **dadurch gekennzeichnet, dass** ausgehend von vorher bestimmten Startflächen eine individuelle Optimierung der Rezeptfläche (3) durchgeführt wird.

4. Verfahren nach einem der Ansprüche 1 bis 3, **dadurch gekennzeichnet, dass** eine individuelle Optimierung der dioptrischen Werte (Sphäre, Astigmatismus, Prisma) in allen Punkten auf der dem Auge zugewandten Rückfläche (3) der Brillenlinse (1) gegeben ist.

5. Verfahren nach einem der Ansprüche 3 oder 4, **dadurch gekennzeichnet, dass** bei der Optimierungsrechnung die prismatischen Nebenwirkungen nach Anforderung für beidäugiges Sehen individuell ausgeglichen sind, wobei mögliche unterschiedliche dioptrische Wirkungen für das rechte und linke Auge berücksichtigt werden.

6. Verfahren nach einem der vorangegangenen Ansprüche, **dadurch gekennzeichnet, dass** zur Aufnahme der Halbfabrikate mit sphärischen oder asphärischen rotationssymmetrischen konvexen Vorderflächen zur Bearbeitung der Rückfläche (3) eine entsprechend der Anzahl der Vorderflächenradien gleiche oder geringere Anzahl passender Halterungen vorgesehen ist, wobei die Halterung der zu bearbeitenden Brillenlinse (1) ohne weitere Hilfsstoffe erfolgt.

## Claims

1. Method for producing spectacle lenses (1) having multifocal power, **characterized in that** the spectacle lenses (1) are produced from semifinished products with spherical or aspherical rotationally symmetrical convex front surfaces (2) with a small number of different radii such that the total dioptric power adaptation which is individually necessary is performed by means of the back surface (3), embodied as a progressive surface, of the spectacle lens (1), wherein a requirement profile in respect of the spectacle lens (1) is formulated, consisting of dioptric desired powers, namely spherical, astigmatic, prismatic, at different points distributed over the spectacle lens (1) or over the whole area, wherein this includes the desired power at the near and far reference points.

2. Method according to Claim 1, **characterized in that** the predefined dioptric desired powers are achieved at all points or a finite number of points on the back surface (3), embodied as a progressive surface, of the spectacle lens (1) in the sense of a best fit.

3. Method according to either of Claims 1 and 2, **characterized in that**, proceeding from previously determined starting surfaces, individual optimization of the prescription surface (3) is performed.

4. Method according to one of Claims 1 to 3, **characterized in that** individual optimization of the dioptric values (sphere, astigmatism, prism) is performed at all points on the back surface (3), which faces the eye, of the spectacle lens (1).

5. Method according to either of Claims 3 and 4, **characterized in that** the prismatic secondary effects are individually balanced in terms of demands for vision in both eyes in the optimization calculation, wherein possible differences in the dioptric powers for the right and left eyes are taken into account.

6. Method according to one of the preceding claims, **characterized in that** for holding the semifinished products with spherical or aspherical rotationally symmetrical convex front surfaces so as to machine the back surface (3), a number of matching holders which is equal to or less than the number of the front surface radii is provided, wherein the spectacle lens (1) to be machined is held without additional auxiliary materials.

## Revendications

1. Procédé de fabrication de verres (1) de lunettes à effet multifocal,
**caractérisé en ce que**
les verres (1) de lunettes sont réalisés sous la forme de produits semi-finis présentant une surface avant (2) convexe, sphérique ou asphérique, à symétrie de rotation, avec peu de rayons différents,
**en ce que** la totalité de l'adaptation de l'effet de dioptrie nécessaire dans chaque cas s'effectue sur la surface arrière (3) du verre (1) de lunette configurée comme surface en verre progressif,
**en ce qu'**un profil de spécification constitué d'effets de dioptrie de consigne, à savoir sphérique, astigmate, prismatique, est formulé pour le verre (1) de lunettes en différents points répartis sur le verre (1) de lunettes ou également sur toute sa surface, y inclus l'effet de consigne au point de référence lointain et au point de référence proche.

2. Procédé selon la revendication 1, **caractérisé en ce que** les effets prédéterminés de dioptrie de consigne sont obtenus au sens d'un meilleur ajustement en tout point ou dans un nombre infini de points de la surface arrière (3) en verre progressif du verre (1) de lunettes.

3. Procédé selon l'une des revendications 1 ou 2, **caractérisé en ce que** partant de surfaces initiales définies à l'avance, on réalise une optimisation individuelle de la surface (3) de la formulation.

4. Procédé selon l'une des revendications 1 à 3, **caractérisé en ce qu'**une optimisation individuelle des valeurs de dioptrie (sphérique, astigmatisme, prisme) en tous points est obtenue sur la surface arrière (3), tournée vers l'oeil, du verre (1) de lunettes.

5. Procédé selon l'une des revendications 3 ou 4, **caractérisé en ce que** lors du calcul d'optimisation, les effets secondaires prismatiques sont compensés individuellement selon les spécifications de vision bioculaire, des effets de dioptrie éventuellement différents pour l'oeil droit et l'oeil gauche étant pris en compte.

6. Procédé selon l'une des revendications précédentes, **caractérisé en ce qu'**un nombre de supports adaptés, égal ou inférieur au nombre des rayons de la surface avant, est prévu pour reprendre le produit semi-fini à surface avant convexe, sphérique ou asphérique, à symétrie de rotation, en vue du traitement de la surface arrière (3), le soutien du verre (1) de lunettes à traiter s'effectuant sans autres substances auxiliaires.
